# EUROPÄISCHE PATENTSCHRIFT

(11) **EP 2 476 500 B1**
(45) Veröffentlichungstag und Bekanntmachung des Hinweises auf die Patenterteilung: **14.03.2018**
(21) Anmeldenummer: 11150922.0
(22) Anmeldetag: 14.01.2011
(51) Int. Cl.: B23K 9/133

(54) **Schweißdrahtfördervorrichtung**
Welding wire feeding device
Dispositif d'approvisionnement en fil de soudage

(43) Veröffentlichungstag der Anmeldung: 18.07.2012
(73) Patentinhaber: EWM AG, 56271 Mündersbach (DE)
(72) Erfinder: Schüller, Knut, 65527 Niedernhausen (DE); Knopp, Norbert, 56337 Arzbach (DE)
(74) Vertreter: Cohausz & Florack

(56) Entgegenhaltungen:
- EP-A2- 0 612 629
- WO-A2-2008/010144
- DE-U1-202005 000 128
- US-A- 5 988 656
- US-A1- 2005 218 129
- US-A1- 2005 224 483
- US-A1- 2008 079 231

## Beschreibung

### EINLEITUNG

Die Erfindung betrifft eine Schweißdrahtfördervorrichtung gemäß dem Oberbegriff des Patentanspruchs 1.

### STAND DER TECHNIK

Für eine Vielzahl von Anwendungen muss ein nabenförmiges Bauteil auf einer Welle befestigt werden. Um die Nabe in axialer Richtung gegen das Verschieben auf der Welle zu sichern, ist ein breites Spektrum an Lösungen vorhanden.

Das Dokument US-A-2005/0224483 offenbart eine Lösung, wobei ein Befestigungselement einen zu mindestens einer Seite offenen, insbesondere zylindrischen, Hohlraum aufweist, in dem ein Betätigungselement angeordnet ist.

Ein weit verbreiteter Lösungsansatz ist, die Nabe durch eine Presspassung in axialer Richtung auf der Welle zu fixieren. In diesem Fall ist für die Montage ein erhöhter Kraftaufwand erforderlich. Mit nur einer Hand ist sie nur schwer möglich. Diese Art der Sicherung ist somit für Anwendungen, die ein regelmäßiges Austauschen des auf der Welle zu fixierenden Bauteils nötig machen, ungeeignet.

Andere Techniken arbeiten mit Nutmuttern, die auf die Welle aufgeschraubt und mit Sicherungsblechen gesichert werden. Für das Anbringen einer Nutmutter sind spezielle Schlüssel erforderlich. Auch die Verwendung von Sicherungsringen ist erforderlich. Auch die Verwendung von Sicherungsringen ist möglich. In beiden Fällen entstehen Losteile wenn die axiale Sicherung des Bauteils aufgehoben werden soll. Diese können verloren gehen oder bei Ablage in ungeeigneter Umgebung Schaden nehmen.

Eine weitere Möglichkeit ist, das Bauteil mittels einer Schraubverbindung auf einer auf der Welle vorgesehenen Anlaufscheibe zu befestigen. Auch hierzu wird Werkzeug benötigt und die Schrauben stellen Losteile dar. Wie bei allen Schraubverbindungen ist zudem auf ein angemessenes Anzugsmoment zu achten.

### BESCHREIBUNG DER ERFINDUNG

Der Erfindung liegt davon ausgehend die Aufgabe zugrunde, eine verbesserte Vorrichtung zum Verbinden einer Welle mit einem nabenförmigen Bauteil zu schaffen.

Diese Aufgabe wird gelöst durch eine Schweißdrahtfördervorrichtung gemäß Anspruch 1. Die Vorrichtung erlaubt, durch insbesondere manuelles Betätigen des Betätigungselements, die Verbindung freizugeben. Dies wird durch das Merkmal der erfindungsgemäßen Vorrichtung erreicht, dass das Betätigungselement axial verschiebbar gelagert ist und einen axialen Abschnitt von radial sich verjüngender Dimension aufweist, entlang dessen ein sich radial zum Betätigungselement erstreckendes Eingriffsmittel gleitet.

Die axiale Bewegung des Betätigungselements wird in eine radiale Bewegung des Eingriffmittels umgesetzt. Das Eingriffsmittel steht in Wirkverbindung mit dem axialen Abschnitt des Betätigungselements von radial sich verjüngender Dimension, indem es auf einer Fläche dieses Abschnitts aufliegt. Bei Betätigung des Betätigungselements verschiebt sich dieses axial und nimmt relativ zum Eingriffsmittel eine andere Position ein. Das Eingriffsmittel gleitet dabei über die Oberfläche des Betätigungselements, d.h. dem Abschnitt von radial sich verjüngender Dimension, und kommt auf einem anderen Teil dieses Abschnitts zu liegen. Die radial sich verjüngende Dimension des Abschnitts führt zu einer veränderlichen radialen Stellung des Eingriffsmittels. Es existiert eine erste solche Stellung, in der Formschluss zwischen Bauteil und Eingriffsmittel besteht und eine zweite Stellung in der kein Formschluss besteht.

Insbesondere kann in der ersten, die Verbindung sichernden axialen Position des Betätigungselements das Eingriffsmittel radial über die Oberfläche des Befestigungselements herausragen, während das Eingriffsmittel dies in der zweiten, die Verbindung freigebenden Position axialen Position des Betätigungselements nicht tut.

Die Welle kann jeden beliebigen Querschnitt haben. Zum Beispiel kann sie einen rechteckigen oder dreieckigen Querschnitt aufweisen. Die Welle kann jedoch insbesondere mindestens teilzylindrisch ausgebildet sein und in dem zylindrischen Abschnitt somit einen runden Querschnitt aufweisen.

Das Eingriffsmittel kann unterschiedlich beschaffen sein. Insbesondere können Stifte, Bolzen und Walzen mit einer Vielzahl von Geometrien zum Einsatz kommen. Nur eine weitere Möglichkeit ist die Ausgestaltung des Eingriffsmittels als Kugel.

Gemäß einem Ausführungsbeispiel ist das Betätigungselement in der ersten, die Verbindung sichernden axialen Position fixierbar. Insbesondere kann das Betätigungselement zur Sicherung der Verbindung von Welle und nabenförmigem Bauteil in der ersten, die Verbindung sichernden axialen Position fixierbar sein. Eine Fixierung des Betätigungselements bedingt, dass auch das Eingriffsmittel, dessen Positionierung von der jeweiligen Position des Betätigungsmittels abhängig ist, in seiner formschlüssigen Verbindung mit dem nabenförmigen Bauteil gehalten wird. Ist das Betätigungselement fixiert, ist auch die Verbindung von Welle und nabenförmigem Bauteil fixiert. Somit wird bis zu einer möglichen Aufhebung der Fixierung des Betätigungsmittels eine dauerhafte Sicherung der Verbindung von Welle und nabenförmigem Bauteil erreicht.

Eine Möglichkeit zur Fixierung des Betätigungselements in der ersten, die Verbindung sichernden axialen Position besteht darin, dass Betätigungselement drehbar in dem Hohlraum der Welle anzuordnen. So kann ein asymmetrisch ausgestaltetes Betätigungselement derart geformt sein, dass es durch Drehen in dem Hohlraum blockiert werden kann, insbesondere indem es dort verkeilt wird. Beispielsweise kann das Betätigungselement einen viereckigen Querschnitt haben. Durch ein Drehen in die Gegenrichtung kann es gegebenenfalls möglich sein, die Blockierung des Betätigungselements und damit seine Fixierung wieder aufzuheben. Eine andere Möglichkeit zur Fixierung des Betätigungselements kann durch Ausbildung eines mit einem Gewinde versehenen Abschnitts am Betätigungselement und ein Ausbilden eines entsprechenden Gewindes in dem Hohlraum der Welle gegeben sein. Dann kann das Betätigungselement in seiner ersten axialen Position durch eine Drehbewegung verschraubt und damit fixiert werden.

Ein Ausführungsbeispiel sieht vor, dass das Betätigungselement in dem Hohlraum gegen die Vorspannkraft eines Gegendruckelements axial verschiebbar angeordnet ist, wobei das Betätigungselement in der ersten, die Verbindung sichernden axialen Position, unter Vorspannung steht und durch eine der Vorspannung entgegengerichtete äußere Krafteinwirkung in die zweite, die Verbindung freigebende axiale Position überführbar ist.

Als Gegendruckelement kommen verschiedene technische Möglichkeiten in Betracht. So können unter anderem Federn ebenso eingesetzt werden wie pneumatische und hydraulische Elemente oder Piezoaktoren.

Bei der Betätigung des Betätigungselements muss die vom Gegendruckelement aufgebrachter Vorspannkraft überwunden oder, z.B. bei Piezoaktoren, abgeschaltet werden. Die Verwendung eines Gegendruckelements in der oben beschriebenen Weise kann den Vorteil bieten, dass ohne Betätigung des Betätigungselements, d.h. ohne äußere Krafteinwirkung, das Betätigungselement automatisch die erste, die Verbindung sichernde axiale Position einnimmt, da die Vorspannung des Gegendruckelements das Betätigungselement in diese axiale Position bewegt. Gleichzeitig kann somit eine automatische Fixierung des Betätigungselements in der ersten, die Verbindung sichernden axialen Position gegeben sein, weil ohne gezielte äußere Krafteinwirkung das Betätigungselement aufgrund der Vorspannung in der ersten axialen Position verbleibt. Andererseits kann bei einer der Vorspannung entgegengerichteten äußeren Krafteinwirkung ausreichender Größe die Sicherung der Verbindung schnell und einfach aufgehoben werden. Ein gesonderter Arbeitsschritt zum Aufheben der Fixierung des Betätigungselements in der ersten axialen Position kann unnötig sein. Das Aufheben der Fixierung und der formschlüssigen Verbindung von Eingriffsmittel und nabenförmigem Bauteil erfolgt in einem einzigen, kombinierten Schritt.

Eine Ausführungsform der Erfindung sieht vor, dass eine Feder als Gegendruckelement verwendet wird. Als genormtes Massenprodukt sind Federn kostengünstig verfügbar. Eine Druckfeder, die zwischen dem Betätigungselement und einer sich in radialer Richtung erstreckenden Innenwand des Hohlraumes angeordnet ist, bringt den Vorteil mit sich, dass keine Befestigung der Feder im Hohlraum erforderlich ist. Eine Befestigung der Feder in dem Hohlraum und/oder ein Verbindung der Feder mit dem Betätigungselement ist jedoch möglich. So kann erreicht werden, dass Feder/und oder Betätigungselement sich nicht von der Vorrichtung lösen und eine unerwünschte Entstehung von Losteilen verhindert werden. Das Betätigungselement kann auf vielfältige Weise ausgestaltet werden. Ein rotationssymmetrischer Aufbau erlaubt eine kostengünstige und unkomplizierte Herstellung, beispielsweise durch Drehen.

Der Abschnitt des Betätigungselements von radial sich verjüngender Dimension kann ebenfalls unterschiedlich geformt sein. Monotone radiale Verjüngungen bieten dabei den Vorteil, dass eine Blockade des Eingriffsmittels beim Gleiten auf dem Abschnitt unwahrscheinlicher wird.

Entsprechend einem Ausführungsbeispiel ist der axiale Abschnitt des Betätigungselements von radial sich verjüngender Dimension die Mantelfläche eines Kegelstumpfs. Ein Betätigungselementabschnitt derartige Formgebung weist nicht nur die Eigenschaft der monotonen radialen Verjüngung auf, sondern besitzt zudem die vorteilhafte Eigenschaft der Rotationssymmetrie und kann daher Bestandteil eines rotationssymmetrischen Betätigungselements sein.

Eine Ausführungsform der erfindungsgemäßen Vorrichtung sieht vor, dass das Betätigungselement axial über die Öffnung des Hohlraums hinausragt. Auf diesem Weg wird erreicht, dass eine, insbesondere manuelle, Krafteinwirkung auf das Betätigungselement komfortabel möglich ist. Dies kann auch bei der Fixierung des Betätigungselements in der ersten axialen Position hilfreich sein. Der über die Öffnung hinausragende Abschnitt des Betätigungselements kann ergonomisch geformt sein. Er kann einstückig mit den übrigen Abschnitten des Betätigungselements ausgebildet sein oder durch ein Aufsatzstück verwirklicht sein.
Eine Ausführungsform der Erfindung sieht vor, dass eine Mantelfläche eines zu der Öffnung des Hohlraums weisenden Abschnitts des Betätigungselements mit einer den Hohlraum begrenzenden, insbesondere zylindrischen, Innenfläche des Befestigungselements abschließt. Dieser Abschnitt des Betätigungselements kann entweder einstückig mit den übrigen Abschnitten der Betätigungselements ausgebildet sein oder durch ein Aufsatzelement verwirklicht werden. Für den Fall eines zylindrischen Hohlraums kann das Abschließen der Mantelfläche mit der Innenfläche erreicht werden, indem der Abschnitt des Betätigungselements mit einer zylindrischen Mantelfläche und geeignetem Durchmesser geformt wird. Ein Vorteil dieser Ausgestaltung des Betätigungselements liegt in der Abdichtung des Hohlraumes. Das Eindringen von Staub und anderen Partikeln wird verhindert. Die Lebensdauer der Vorrichtung nimmt zu. Gleichzeitig wird das Verletzungsrisiko für einen Bediener der Vorrichtung deutlich verringert, da das Einklemmen eines Fingers des Bedieners durch den Abschluss des Hohlraums ausgeschlossen ist.

Gemäß der Erfindung ist ein Blockierungselement zur Einschränkung der axialen Bewegung des Betätigungselements vorgesehen. Das Blockierungselement kann beispielsweise verhindern, dass sich das Betätigungselement aus dem Hohlraum herauslöst und/oder dass es zu tief in den Hohlraum hinein bewegt wird. Um eine Blockierung in beiden axialen Bewegungsrichtungen des Betätigungselements zu erzielen, können gegebenenfalls zwei Blockierungselemente vorhanden sein.

Gemäß der Erfindung ist das Blockierungselement als Anlaufkante am Betätigungselement ausgebildet und die Blockierungswirkung tritt ein, wenn ein Fläche des Eingriffsmittels an der Anlaufkante anliegt. Beispielsweise kann in der ersten, die Verbindung sichernden axialen Position des Betätigungselements die Anlaufkante an einer Fläche des Eingriffsmittels anliegen. Das Eingriffsmittel sperrt in Zusammenwirken mit der Anlaufkante die Bewegung des Betätigungselements in der Richtung, in die die an der Anlaufkante anliegenden Fläche des Eingriffsmittels weist. Eine derartige Ausgestaltung des Blockierelements als Anlaufkante ist vorteilhaft, da die Anlaufkante bereits bei der Herstellung des Betätigungselements geformt und somit kostengünstig bereitgestellt werden kann.

Bei einem Ausführungsbeispiel der Erfindung ist vorgesehen, dass eine Fläche des Eingriffsmittels in der ersten, die Verbindung sichernden axialen Position des Betätigungselements kraftschlüssig an der Anlaufkante anliegt und eine dieser Fläche gegenüberliegende Fläche des Eingriffsmittels kraftschlüssig an einer Fläche des Befestigungselements anliegt. Das kraftschlüssige Anliegen der Fläche des Eingriffsmittels an der Anlaufkante kann zum Beispiel durch ein in der oben beschriebenen Weise vorgesehenes Gegendruckelement verwirklicht werden. Die Vorspannung des Gegendruckelements presst dann die Anlaufkante des Betätigungselements gegen die Fläche des Eingriffsmittels. Damit eine der Fläche des Eingriffsmittels, die kraftschlüssig an der Anlaufkante anliegt, gegenüberliegende Fläche kraftschlüssig an einer Fläche des Befestigungselements anliegt, kann das Eingriffsmittel durch eine Ausnehmung in der Wand des Befestigungselements geführt sein, so dass es zwischen der Anlaufkante des Betätigungselements und dem Rand der Ausnehmung kraftschlüssig fixiert wird. Dadurch wird verhindert, dass sich das Eingriffsmittel aus dem Befestigungselement löst. Da das Befestigungselement einer Welle zugeordnet ist, kann es der Rotation der Welle folgen. Nimmt es dabei eine Stellung ein, in der das Eingriffsmittel nach unten zeigt, würde es ohne eine solche Fixierung aus dem Befestigungselement herausfallen.

Eine Ausführungsform der erfindungsgemäßen Vorrichtung sieht vor, dass das Befestigungselement einstückig mit der Welle verbunden ist. In diesem Fall sind keine Verbindungsmittel erforderlich, die das Befestigungselement an die Welle anbinden. Neben der ausgeprägten mechanischen Belastbarkeit dieser Lösung zeichnet sie sich durch günstige Herstellungskosten aus.

Eine weitere Ausführungsform der Erfindung beinhaltet, dass der Hohlraum, der das Betätigungselement enthält, in der Welle selbst ausgebildet ist. Anders ausgedrückt heißt das, dass bei einstückiger Verbindung von Befestigungselement und Welle zudem der Außendurchmesser des Befestigungselements gleich dem Außendurchmesser der Welle ist. Der Hohlraum kann zum Beispiel durch Bohren entstanden sein. Bei einer Hohlwelle entfällt dieser Schritt der Herstellung naturgemäß, so dass die erfindungsgemäße Vorrichtung besonders einfach und kostengünstig realisiert werden kann.

Eine Ausgestaltung der Erfindung beinhaltet, dass das Bauteil eine mit dem Eingriffsmittel korrespondierende Aufnahme aufweist. Eine solche Aufnahme kann beispielsweise durch eine Bohrung oder Nut gebildet werden, in die das Eingriffsmittel in der ersten, die Verbindung sichernden axialen Position hereinragt. Auf diese Weise kann ein sicherer Formschluss von Eingriffsmittel und Bauteil herbeigeführt werden.

Eine Ausführungsform der Erfindung sieht vor, dass das Eingriffsmittel formschlüssig an einer Innenfläche des Bauteils anliegt. Eine solche Fläche kann beispielsweise eine sich radial ausbreitende Seitenfläche einer Nut sein. Abhängig von der Geometrie dieser Nut ergibt sich ein axiales Spiel des Bauteils, da es jeweils soweit auf der Achse verschiebbar ist, bis das Eingriffsmittel an einer der beiden Seitenflächen der Nut zum Formschluss kommt. Bei entsprechendem Axialabstand der Seitenflächen kann das Bauteil jedoch ohne axiales Spiel mit dem Befestigungselement verbunden werden. Des Weiteren ist es möglich, den Formschluss von Eingriffsmittel und Bauteil an einer der Welle zugewandten Fläche des Bauteils zu erwirken. In diesem Fall sichert das Eingriffsmittel die radiale Position des Bauteils.

In einer Ausführungsform der erfindungsgemäßen Vorrichtung liegt das Eingriffsmittel formschlüssig an einer äußeren, insbesondere sich radial erstreckenden, Seitenfläche des Bauteils an. Ist das Eingriffsmittel in axialer Richtung vor oder hinter dem Bauteil positioniert, sichert das Eingriffsmittel die axiale Position des Bauteils in einer axialen Richtung. Es ist dazu keine aufwendige exakte axiale Positionierung des Bauteils auf dem Befestigungselement oder der Welle selbst notwendig.

Eine Ausgestaltung der Erfindung umfasst ein Anlaufelement, das auf dem Befestigungselement oder der Welle vorgesehen ist. Das Anlaufelement sichert die Position des Bauteils in einer axialen Richtung. Auch wenn das Bauteil axial zwischen Anlaufelement und Eingriffsmittel angeordnet ist und das Eingriffsmittel formschlüssig an einer äußeren Seitenfläche des Bauteils anliegt, kann somit eine beidseitige axiale Sicherung erreicht werden. Vorteilhaft kann sein, wenn der axiale Abstand zwischen Eingriffsmittel und Anlaufelement so gewählt ist, dass bei Formschluss von Bauteil und Eingriffsmittel das Bauteil kraftschlüssig am Anlaufelement anliegt. Das Bauteil wird dann bei Rotation der Welle durch das Anlaufelement mitgeführt. Ein Verbinden von Anlaufelement und Bauteil - zum Beispiel durch Verschrauben - ist in diesem Fall nicht notwendig.

In einer Ausführungsform der Erfindung ist das nabenförmige Bauteil eine Rolle. Rollen kommen unter anderem in Fördervorrichtungen, beispielsweise für Draht, als Förderrollen zum Einsatz. Schweißdrahtfördervorrichtungen setzten Drahtförderrollen ein, die über eine Welle angetrieben werden. Zur Führung des Drahtes ist meist eine Nut in der Schweißdrahtförderrolle vorgesehen. Schweißdrähte sind je nach Anwendung unterschiedlich ausgestaltet. Insbesondere unterscheiden sie sich in ihrem Profil. Dementsprechend muss die Führungsnut an die Eigenschaften des Drahtes angepasst sein. Eine einfache Möglichkeit, diese Aufgabe zu lösen, ist die Verwendung mehrerer austauschbarer Drahtförderrollen mit unterschiedlichen Nuten. Je nach Drahtprofil kann dann die passende Förderrolle montiert werden. Einige Ausführungsformen der erfindungsgemäßen Vorrichtung erleichtern das Auswechseln der Förderrollen erheblich, da die Verbindung von Rolle und Welle schnell und ohne Werkzeug gelöst werden kann.

Eine vorteilhafte Ausgestaltung der Erfindung sieht vor, dass zwei parallel angeordnete Nute für unterschiedliche Drahtprofile vorgesehen sind. Es wird so ermöglicht, mit einer Rolle Drähte unterschiedlichen Profils zu fördern. In einer Ausführungsform der erfindungsgemäßen Vorrichtung sind die Nute symmetrisch zur axialen Mitte der Rolle angeordnet. Das Umstellen von einem Drahtprofil auf das andere Drahtprofil wird so einfach durch Lösen und Umdrehen der Förderrolle sowie anschließender erneuter Befestigung erreicht. Der Anordnung der Nute symmetrisch zur axialen Mitte der Rolle bewirkt, dass unabhängig von der eingestellten Nut der Draht relativ zu weiteren Förder- oder Führungsmitteln in der gleichen Position gehalten wird.

Die Erfindung wird im Folgenden anhand von Zeichnungen zweier Ausführungsbeispiele beschrieben.

### BESCHREIBUNG DER FIGUREN

Es zeigen
- Fig. 1a: das erste Ausführungsbeispiel eines erfindungsgemäßen Befestigungselements in Seitenansicht;
- Fig. 1b: Figur 1a in Vorderansicht;
- Fig. 2a: das Ausführungsbeispiel der Erfindung aus Figur 1a in Seitenansichtansicht zusammen mit einem nabenförmigen Bauteil, wobei sich das Betätigungselement in der zweiten, die Verbindung freigebenden axialen Position befindet;
- Fig. 2b: Figur 2a in Vorderansicht;
- Fig. 3a: das Ausführungsbeispiel der Erfindung aus Figur 2a in Seitenansicht, wobei sich das Betätigungselement in der ersten, die Verbindung sichernden axialen Position befindet und die Bauteile aufgeschoben sind;
- Fig. 3b: Figur 3a in Vorderansicht;
- Fig. 4a: das zweite Ausführungsbeispiel der Erfindung in Seitenansicht, wobei sich das Betätigungselement in der ersten, die Verbindung sichernden axialen Position befindet;
- Fig. 4b: eine Vorderansicht zu Fig. 4a;
- Fig. 5a: das Ausführungsbeispiel aus Figur 4, wobei sich das Betätigungselement in der zweiten, die Verbindung freigebenden axialen Position befindet;
- Fig. 5b: eine Vorderansicht zu Fig. 5a.

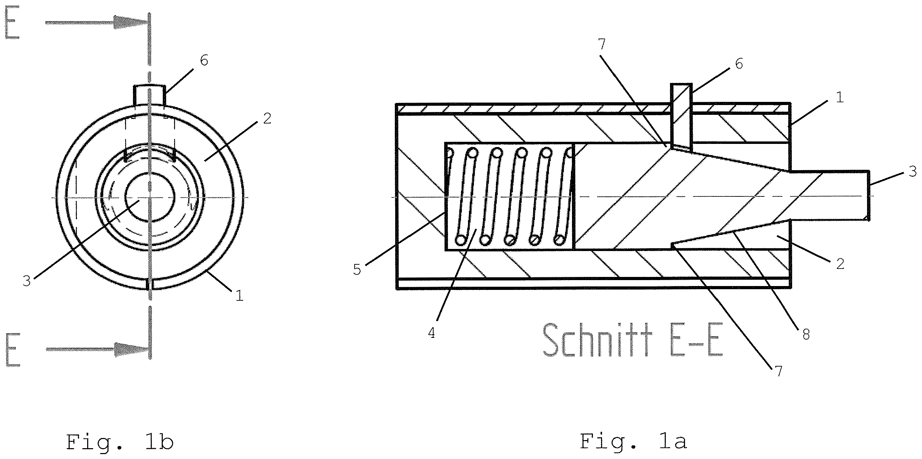

Figur 1a zeigt ein Ausführungsbeispiel eines erfindungsgemäßen Befestigungselements in Seitenansicht. Das Befestigungselement ist hier Teil einer Welle 1. In einem Hohlraum 2 der Welle 1 ist ein Betätigungselement 3 angeordnet. Das Betätigungselement 3 ist in dem Hohlraum 2 gegen die Vorspannkraft eines Gegendruckelements 4 axial verschiebbar angeordnet. Das Gegendruckelement ist als Druckfeder 4 ausgebildet und zwischen dem Betätigungselement 3 und einer sich in radialer Richtung erstreckenden Innenwand 5 des Hohlraumes positioniert. Ein Stift 6 dient als Eingriffsmittel. Am Betätigungselement 3 ist eine Anlaufkante 7 als Blockierungselement vorgesehen. Das Betätigungselement 3 verfügt über einen axialen Abschnitt 8 von radial sich verjüngender Dimension. Der Abschnitt 8 ist als Mantelfläche eines Kegelstumpfes ausgebildet.

In dem in Figur 1a dargestellten Zustand wirkt keine äußere Kraft auf das Betätigungselement 3 und damit auf die Druckfeder 4 ein. Diese drückt das Betätigungselement 3 somit ein Stück weit aus der Öffnung des Hohlraums 2 der Welle 1. Das Eingriffsmittel 6 nimmt eine Position auf dem Abschnitt 8 ein, die bewirkt, dass es radial über die Begrenzung der Welle 1 herausragt. Der Stift 6 ist durch die äußere Wandung der Welle 1, die gleichzeitig die äußere Wandung des Befestigungselements darstellt, geführt. Aufgrund der Vorspannung der Druckfeder 4 liegt eine Fläche des Stifts 6 kraftschlüssig an der Anlaufkante 7 an, so dass eine weitere axiale Bewegung des Betätigungselements 3 aus der Öffnung des Hohlraums 2 heraus, d.h. in der Zeichnung nach rechts, verhindert wird und in dieser Richtung eine Blockierungswirkung eintritt. Eine der Fläche des Stiftes 6, die an der Anlaufkante 7 kraftschlüssig anliegt, gegenüberliegende Fläche des Stifts 6 liegt kraftschlüssig an einer Fläche des Befestigungselements an. Hierbei handelt es sich um eine Seitenfläche der Durchführung durch die äußere Wandung der Welle 1, durch die der Stift 6 über die Wellenoberfläche radial herausragt. Durch das Zusammenwirken der Anlaufkante 7, des Stifts 6 und der Durchführung wird verhindert, dass der Stift 6 seine radiale Position ohne äußere Krafteinwirkung verändert. Bei Rotation der Welle 1 fällt der Stift 6 auch dann nicht zu Boden, wenn er nach unten zeigt. Damit der Stift 6 sicher auf dem Abschnitt 8 aufliegt, ist die Kontaktfläche des Stiftes 6 an die Oberfläche des Abschnitts 8 angepasst. Sie ist im beschriebenen Ausführungsbeispiel in demselben Winkel geneigt wie Abschnitt 8.

Das Betätigungselement 3 ist rotationssymmetrisch und einstückig gestaltet, so dass es unkompliziert, z.B. durch Drehen, hergestellt werden kann. Es setzt sich, in der Zeichnung von links nach rechts betrachtet, aus einem zylindrischen, einem als Kegelstumpf 8 ausgebildeten und einem weiteren zylindrischen Grundkörper zusammen. Der axiale Abschnitt 8 des Betätigungselements 3 von radial sich verjüngender Dimension verjüngt sich nicht nur monoton, wodurch eine Blockade des Eingriffsmittels 6 beim Gleiten auf dem Abschnitt 8 unwahrscheinlicher wird, sondern auch linear.

Auf diese Weise wird nicht nur eine besonders simple Konstruktion des Betätigungselements 3 erreicht, sondern auch bewirkt, dass sich die radiale Position des Stiftes 6 gleichmäßig und linear mit der axialen Position des Betätigungselements 3 ändert.

Figur 1b ist eine Vorderansicht zu Figur 1a. Auch hier sind Welle 1, Hohlraum 2 und das Betätigungselement 3 zu sehen. Gemäß der axialen Stellung des Betätigungselements 3, ragt das Eingriffsmittel 6 radial über die Welle 1 heraus.

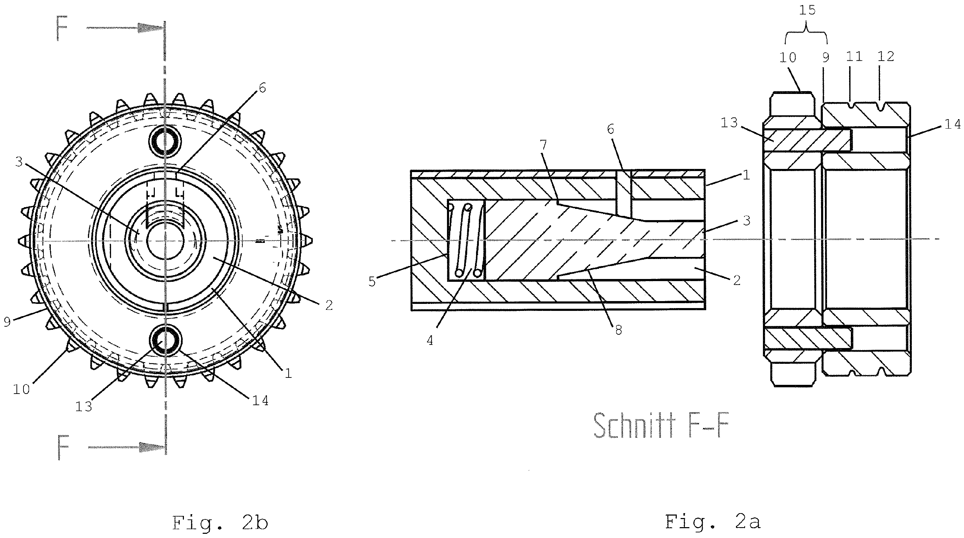

Figur 2a zeigt das Ausführungsbeispiel der Erfindung aus Figur 1a in Seitenansichtansicht zusammen mit einem nabenförmigen Bauteil 15, das aus einer mit einem Zahnrad 10 verbundenen Drahtförderrolle 9 besteht, wobei sich das Betätigungselement 3 in einer zweiten, die Verbindung freigebenden axialen Position befindet.

Förderrolle 9 und Zahnrad 10 sind über Stifte 13 miteinander verbunden, die ihn Aufnahmen 14 der Rolle 9 eingreifen. In der Drahtförderrolle 9 sind Führungsnute 11 und 12 vorgesehen, die für die Führung von Drähten mit unterschiedlichen Profilen konfektioniert sind. Sie sind symmetrisch zur axialen Mitte der Rolle 9 angeordnet.

Die Druckfeder 4 ist durch eine äußere Krafteinwirkung komprimiert dargestellt. Die sich ergebende axiale Position des Betätigungselements 3 bewirkt, dass der Stift 6 mit der Mantelfläche der zylindrischen Welle 1 abschließt. In diesem Zustand können die Drahtförderrolle 9 und das Zahnrad 10 auf die Welle aufgeschoben werden. Ebenso ist es in diesem Zustand möglich das nabenförmige Bauteil 15 von der Welle 1 abzuziehen, wenn es auf diese aufgeschoben ist. In der gezeigten ersten axialen Position des Betätigungselements 3 ist die Verbindung von Welle 1 und nabenförmigem Bauteil 15 damit freigegeben.

Figur 2b ist eine Vorderansicht zu Figur 2a.

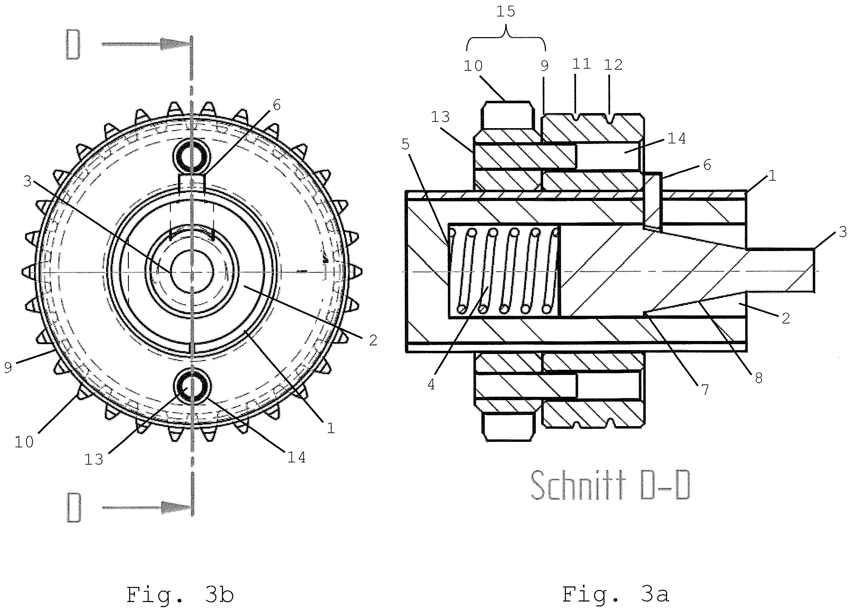

Figur 3a zeigt in Seitenansicht das Ausführungsbeispiel der Erfindung aus Figur 2a, wobei sich das Betätigungselement 3 in einer ersteb, die Verbindung sichernden axialen Position befindet (vgl. Figuren 1a und 1b). In Fig. 3a ist jedoch das Bauteil 15 aufgeschoben. Nach dem Aufschieben von Rolle 9 und Zahnrad 10 wurde die dazu nötige Krafteinwirkung auf das Betätigungselement 3 abgestellt. Das Eingriffsmittel 6 hat daher aufgrund der Vorspannung der Druckfeder 4 seine zweite, die Verbindung sichernde radiale Position eingenommen. Es entsteht Formschluss zwischen dem Stift 6 als Eingriffsmittel und einer sich radial erstreckenden Seitenfläche der Rolle 9. Die Position des Bauteils 15 ist auf der Welle 1 in einer axialen Richtung (in der Zeichnung nach rechts) gesichert. Die Vorspannung der Druckfeder 4 fixiert das Betätigungselement 3 in der hier gezeigten ersten axialen Position, da ohne äußere Krafteinwirkung keine Bewegung des Betätigungsmittels 3 zwischen Druckfeder 5 und dem kraftschlüssig an der Anlaufkante 7 anliegenden Stift 6 möglich ist.

Figur 3b ist eine Vorderansicht zu Figur 3a.

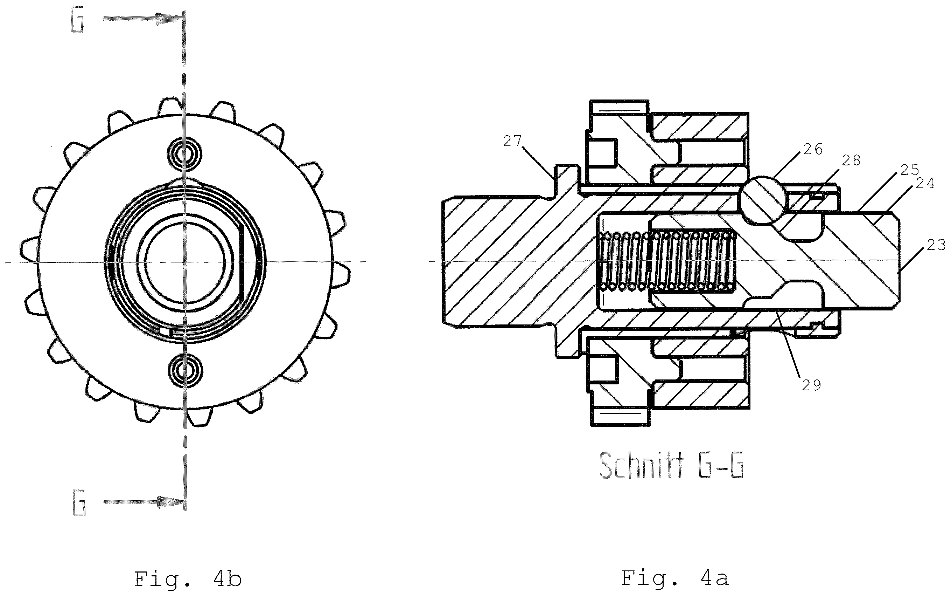

Figur 4a zeigt ein weiteres Ausführungsbeispiel der Erfindung, wobei sich das Betätigungselement 23 in der ersten, die Verbindung sichernden axialen Position befindet.

Nachstehend wird lediglich auf Unterschiede zu dem zuvor erläuterten Ausführungsbeispiel eingegangen. Der Übersichtlichkeit halber sind Bezugszeichen nur für gegenüber dem ersten Ausführungsbeispiel unterschiedlich gestaltete Komponenten aufgeführt. Ansonsten werden nachfolgend identische Bezugszeichen verwendet. Betätigungselement 23 und Gegendruckelement sind auch in diesem Beispiel in einem Hohlraum einer Welle 1 untergebracht. Eine Mantelfläche 25 eines zu der Öffnung des Hohlraums 2 weisenden Abschnitts 24 des Betätigungselements 23 schließt mit einer den Hohlraum 2 begrenzenden, zylindrischen Innenfläche 29 des Befestigungselements 1 ab. Folglich wird die Mechanik des Befestigungselements teilweise verdeckt. Somit können keine Fremdkörper in die Befestigungsmechanik eindringen und gleichzeitig wird die Verletzungsgefahr für den Bediener reduziert. Das Eingriffsmittel ist in diesem Ausführungsbeispiel als Kugel 26 ausgestaltet. Für den radial sich verjüngende Abschnitt 28 des Betätigungsmittels 23 wurde eine andere Geometrie gewählt als im ersten Ausführungsbeispiel. Auf der Welle 1 ist ein Anlaufelement 27 so angebracht, dass es Rotationsbewegungen der Welle mit möglichst geringem Schlupf folgt. Das Zahnrad 10 liegt am Anlaufelement 27 an. Auf das Zahnrad 10 ist, wie im ersten Ausführungsbeispiel, die Rolle 9 aufgeschoben und über Stifte 13 die in die Bohrungen 14 eingreifen mit ihm verbunden. Die Kugel 26 sichert auf der dem Anlaufelement 27 gegenüberliegenden Seite der Welle 1 die Verbindung zwischen Welle 1 und Bauteil 15. Das Bauteil 15 ist also zwischen dem Anlaufelement 27 und der Kugel 26 als Eingriffsmittel angeordnet. Dabei ist der axiale Abstand zwischen Kugel 26 und Anlaufelement 27 so gewählt, dass der Formschluss von Kugel 26 und Drahtförderrolle 9 gleichzeitig zu einer kraftschlüssigen Verbindung von Anlaufelement 27 und Zahnrad 10 führt, d.h. dass das Zahnrad 10 gegen das Anlaufelement 27 gedrückt wird. Die Rotation der Welle wird somit über das Anlaufelement 27 an das Zahnrad 10 und die damit verbundene Rolle 9 weitergegeben.

Fig. 4b ist eine Vorderansicht zu Fig. 4a.

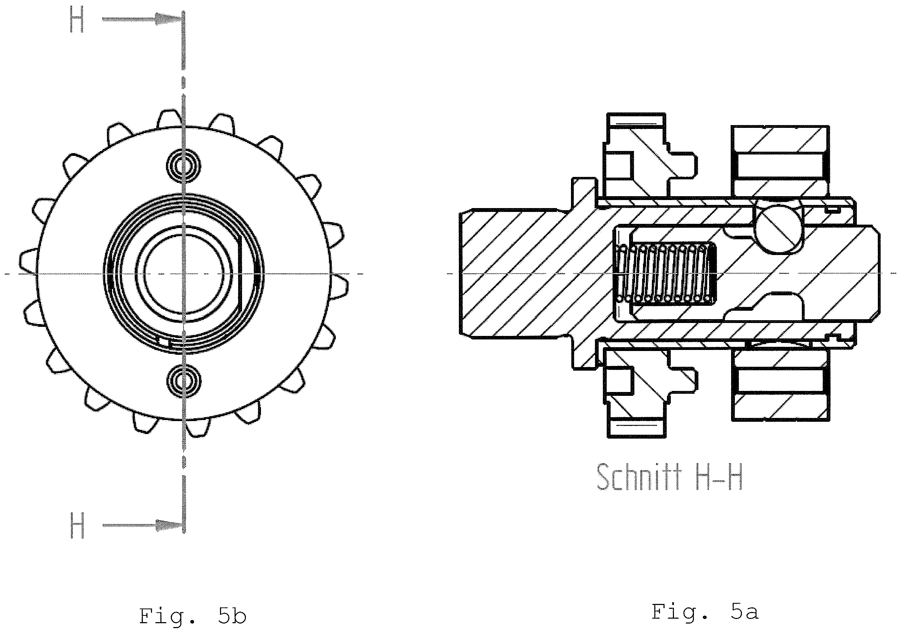

Fig. 5a zeigt das Ausführungsbeispiel aus den Figuren 4a und 4b, wobei sich das Betätigungselement 23 in der zweiten, die Verbindung freigebenden axialen Position befindet. Die Kugel 26 ragt nicht über die Wandung der Welle 1 hinaus, so dass wie angebildet die Drahtförderrolle 9 von der Welle 1 abgezogen werden kann.

Fig. 5b ist eine Vorderansicht zu Fig. 5a.

## Patentansprüche

1. Schweißdrahtfördervorrichtung mit einer Welle (1) und einem der Welle (1) zugeordneten Befestigungselement zum Verbinden der Welle (1) mit einem als Rolle (9) ausgestalteten, nabenförmigen Bauteil (15), wobei das Befestigungselement einen zu mindestens einer Seite offenen, insbesondere zylindrischen, Hohlraum (2) aufweist, in dem ein Betätigungselement (3, 23) angeordnet ist,
**dadurch gekennzeichnet, dass** das Betätigungselement (3, 23) einen axialen Abschnitt (8, 28) von radial sich verjüngender Dimension aufweist, entlang dessen ein sich radial zum Betätigungselement (3, 23) erstreckendes Eingriffsmittel (6, 26) gleitet, und welches axial verschiebbar angeordnet ist, derart, dass in einer ersten, die Verbindung sichernden axialen Position des Betätigungselements (3, 23) das Eingriffsmittel (6, 26) formschlüssig mit dem nabenförmigen Bauteil (15) in Verbindung steht und dass in einer zweiten, die Verbindung freigebenden axialen Position des Betätigungselements (3, 23) das Eingriffsmittel (6, 26) außer Formschluss ist,
wobei ein als Anlaufkante (7) am Betätigungselement (3, 23) ausgebildetes Blockierungselement zur Einschränkung der axialen Bewegung des Betätigungselements (3, 23) vorgesehen ist und die Blockierungswirkung eintritt, wenn eine Fläche des Eingriffsmittels (6, 26) an der Anlaufkante (7) anliegt.

2. Vorrichtung nach Anspruch 1, **dadurch gekennzeichnet, dass** das Betätigungselement (3, 23) in der ersten, die Verbindung sichernden axialen Position fixierbar ist.

3. Vorrichtung nach Anspruch 2, **dadurch gekennzeichnet, dass** das Betätigungselement (3, 23) in dem Hohlraum (2) gegen die Vorspannkraft eines Gegendruckelements (4) axial verschiebbar angeordnet ist, wobei das Betätigungselement (3, 23) in der ersten, die Verbindung sichernden axialen Position, unter Vorspannung steht und durch eine der Vorspannung entgegengerichtete äußere Krafteinwirkung in die zweite, die Verbindung freigebende axiale Position überführbar ist.

4. Vorrichtung nach Anspruch 3, **dadurch gekennzeichnet, dass** das Gegendruckelement als Druckfeder (4) ausgebildet ist und zwischen dem Betätigungselement (3, 23) und einer sich in radialer Richtung erstreckenden Innenwand (5) des Hohlraumes (2) angeordnet ist.

5. Vorrichtung nach einem der vorhergehenden Ansprüche, **dadurch gekennzeichnet, dass** der axiale Abschnitt (8) des Betätigungselements (3) von radial sich verjüngender Dimension die Mantelfläche eines Kegelstumpfes ist.

6. Vorrichtung nach einem der vorhergehenden Ansprüche, **dadurch gekennzeichnet, dass** das eine Mantelfläche (25) eines zu der Öffnung des Hohlraums (2) weisenden Abschnitts (24) des Betätigungselements (23) mit einer den Hohlraum (2) begrenzenden, insbesondere zylindrischen, Innenfläche (29) des Befestigungselements (1) abschließt.

7. Vorrichtung nach einem der Ansprüche 1 bis 6, **dadurch gekennzeichnet, dass** die Fläche des Eingriffsmittels (6, 26) in der ersten, die Verbindung sichernden axialen Position des Betätigungselements (3, 23) kraftschlüssig an der Anlaufkante (7) anliegt und eine dieser Fläche gegenüberliegende Fläche des Eingriffsmittels (6, 26) kraftschlüssig an einer Fläche des Befestigungselements anliegt.

8. Vorrichtung nach einem der vorhergehenden Ansprüche, **dadurch gekennzeichnet, dass** Befestigungselement und Welle (1) einstückig ausgebildet sind.

9. Vorrichtung nach einem der vorhergehenden Ansprüche, **dadurch gekennzeichnet, dass** das Bauteil (15) eine mit dem Eingriffsmittel (6, 26) korrespondierende Aufnahme aufweist.

10. Vorrichtung nach einem der Ansprüche 1 bis 8, **dadurch gekennzeichnet, dass** das Eingriffsmittel (6, 26) formschlüssig an einer Innenfläche des Bauteils (9) anliegt.

11. Vorrichtung nach einem der Ansprüche 1 bis 8, **dadurch gekennzeichnet, dass** das Eingriffsmittel (6, 26) in axialer Richtung vor oder hinter dem Bauteil (15) positioniert ist und formschlüssig an einer äußeren, sich insbesondere radial erstreckenden, Seitenfläche des Bauteils (9) anliegt.

12. Vorrichtung nach einem der vorhergehenden Ansprüche, **dadurch gekennzeichnet, dass** auf dem Befestigungselement oder der Welle (1) ein Anlaufelement (27) vorgesehen ist.

13. Vorrichtung nach Anspruch 12, **dadurch gekennzeichnet, dass** das Bauteil (15) axial zwischen Anlaufelement (27) und Eingriffsmittel (26) angeordnet ist und der axiale Abstand zwischen Eingriffsmittel (26) und Anlaufelement (27) so gewählt ist, dass bei Formschluss von Bauteil (15) und Eingriffsmittel (26) das Bauteil (15) kraftschlüssig mit dem Anlaufelement (27) verbunden ist.

14. Vorrichtung nach einem der vorhergehenden Ansprüche, **dadurch gekennzeichnet, dass** die Rolle (9) als Drahtförderrolle ausgestaltet ist, die zwei parallele und symmetrisch zur axialen Mitte der Rolle (9) angeordnete Führungsnute (11, 12) für unterschiedliche Drahtprofile aufweist.

## Claims

1. Welding wire conveyor device comprising a shaft (1) and a fastener assigned to the shaft (1) for connecting the shaft (1) to a hub-shaped component (15) in the form of a roller (9), the fastener having an, in particular cylindrical, cavity (2) which is open on at least one side, in which cavity an actuating element (3, 23) is arranged, **characterised in that** the actuating element (3, 23) has an axial portion (8, 28) having a radially tapering dimension, along which portion an engagement means (6,26) extending radially relative to the actuating element (3, 23) slides, and which is arranged in an axially movable manner in such a way that, in a first axial position of the actuating element (3, 23) which secures the connection, the engagement means (6, 26) is connected in an interlocking manner to the hub-shaped component (15), and **in that**, in a second axial position of the actuating element (3, 23) which releases the connection, the engagement means (6, 26) is out of the interlocking fit, a blocking element formed as a leading edge (7) on the actuating element (3, 23) being provided to restrict the axial movement of the actuating element (3, 23), and the blocking effect occurring when a face of the engagement means (6, 26) bears against the leading edge (7).

2. Device according to claim 1, **characterised in that** the actuating element (3, 23) can be fixed in the first axial position which secures the connection.

3. Device according to claim 2, **characterised in that** the actuating element (3, 23) in the cavity (2) is arranged so as to be axially movable counter to the prestressing force of a counter-pressure element (4), the actuating element (3, 23), in the first axial position which secures the connection, being prestressed and being able to be transferred into the second axial position which releases the connection by an external force in opposition to the prestress.

4. Device according to claim 3, **characterised in that** the counter-pressure element is in the form of a compression spring (4) and is arranged between the actuating element (3, 23) and an inner wall (5), extending in the radial direction, of the cavity (2).

5. Device according to any one of the preceding claims, **characterised in that** the axial portion (8) of the actuating element (3) having a radially tapering dimension is the lateral face of a truncated cone.

6. Device according to any one of the preceding claims, **characterised in that** the a lateral face (25) of a portion (24), pointing towards the opening of the cavity (2), of the actuating element (23) ends in an in particular cylindrical inner face (29), defining the cavity (2), of the actuating element (1).

7. Device according to any one of claims 1 to 6, **characterised in that** the face of the engagement means (6, 26), in the first axial position of the actuating element (3, 23) which secures the connection, is in frictional contact with the leading edge (7), and a face of the engagement means (6, 26) opposite said face is in frictional contact with a face of the actuating element.

8. Device according to any one of the preceding claims, **characterised in that** the fastener and the shaft (1) are formed as a single piece.

9. Device according to any one of the preceding claims, **characterised in that** the component (15) comprises a receiving portion corresponding to the engagement means (6, 26).

10. Device according to any one of claims 1 to 8, **characterised in that** the engagement means (6, 26) is in interlocking contact with an inner face of the component (9).

11. Device according to any one of claims 1 to 8, **characterised in that** the engagement means (6, 26) is positioned in front of or behind the component (15) in the axial direction and is in interlocking contact with an outer, in particular radially extending, lateral face of the component (9).

12. Device according to any one of the preceding claims, **characterised in that** a stop element (27) is provided on the fastener or the shaft (1).

13. Device according to claim 12, **characterised in that** the component (15) is arranged axially between the stop element (27) and the engagement means (26), and the axial distance between the engagement means (26) and the stop element (27) is selected in such a way that, when the component (15) and engagement means (26) interlock, the component (15) is connected with a force fit to the stop element (27).

14. Device according to any one of the preceding claims, **characterised in that** the roller (9) is in the form of a wire conveyor roller which comprises two parallel guide grooves (11,12), which are arranged symmetrically to the axial centre of the roller (9), for different wire profiles.

## Revendications

1. Dispositif d'acheminement de fil de soudure comportant un arbre (1) et un élément de fixation associé à l'arbre (1) pour le raccordement de l'arbre (1) à un composant (15) en forme de moyeu configuré en tant que rouleau (9), où l'élément de fixation présente une cavité (2), en particulier cylindrique, dont au moins un côté est ouvert, dans laquelle est agencé un élément d'actionnement (3, 23), **caractérisé en ce que** l'élément d'actionnement (3, 23) présente une section axiale (8, 28) d'une dimension se rétrécissant radialement, le long de laquelle glisse un moyen d'engagement (6, 26) s'étendant radialement par rapport à l'élément d'actionnement (3, 23), et qui est agencé de manière à pouvoir être déplacé axialement de telle sorte que, dans une première position axiale de l'élément d'actionnement (3, 23) assurant le raccordement, le moyen d'engagement (6, 26) est en contact par complémentarité de forme avec le composant (15) en forme de moyeu et que, dans une deuxième position axiale de l'élément d'actionnement (3, 23) libérant le raccordement, le moyen d'engagement (6, 26) n'est pas dans une complémentarité de forme, étant entendu qu'un élément de blocage est prévu sur l'élément d'actionnement (3, 23) et est réalisé sous la forme d'un bord de contact (7) destiné à restreindre le mouvement axial de l'élément d'actionnement (3, 23), et étant entendu que l'effet de blocage se produit lorsqu'une surface du moyen d'engagement (6, 26) repose sur le bord de contact (7).

2. Dispositif selon la revendication 1, **caractérisé en ce que** l'élément d'actionnement (3, 23) peut être fixé dans la première position axiale assurant le raccordement.

3. Dispositif selon la revendication 2, **caractérisé en ce que** l'élément d'actionnement (3, 23) est agencé axialement de façon à pouvoir être déplacé dans la cavité (2) contre une force de précontrainte d'un élément de contre-pression (4), où l'élément d'actionnement (3, 23) est sous tension dans la première position axiale assurant le raccordement et peut être transféré, sous l'effet d'une force externe dirigée à l'opposé de la tension, dans la deuxième position axiale libérant le raccordement.

4. Dispositif selon la revendication 3, **caractérisé en ce que** l'élément de contre-pression est réalisé sous la forme d'un ressort de pression (4), agencé entre l'élément d'actionnement (3, 23) et une paroi intérieure (5) de la cavité (2) s'étendant en direction radiale.

5. Dispositif selon l'une quelconque des revendications précédentes, **caractérisé en ce que** la section axiale (8) de l'élément d'actionnement (3) d'une dimension se rétrécissant radialement est la surface enveloppante d'un tronc de cône.

6. Dispositif selon l'une quelconque des revendications précédentes, **caractérisé en ce qu'**une surface enveloppante (25) d'une section (24) de l'élément d'actionnement (23) dirigée vers l'ouverture de la cavité (2) se termine par une surface intérieure (29) de l'élément de fixation (1), en particulier cylindrique, délimitant la cavité (2).

7. Dispositif selon l'une quelconque des revendications 1 à 6, **caractérisé en ce que** la surface du moyen d'engagement (6, 26) s'appuie par liaison de force, dans la première position axiale de l'élément d'actionnement (3, 23) assurant le raccordement, sur le bord de contact (7), et **en ce qu'**une surface du moyen d'engagement (6, 26) opposée à cette surface s'appuie par liaison de force sur une surface de l'élément de fixation.

8. Dispositif selon l'une quelconque des revendications précédentes, **caractérisé en ce que** l'élément de fixation et l'arbre (1) sont conçus d'une seule pièce.

9. Dispositif selon l'une quelconque des revendications précédentes, **caractérisé en ce que** le composant (15) présente une protubérance qui correspond au moyen d'engagement (6, 26).

10. Dispositif selon l'une quelconque des revendications 1 à 8, **caractérisé en ce que** le moyen d'engagement (6, 26) s'appuie par complémentarité de forme sur une face interne du composant (9).

11. Dispositif selon l'une quelconque des revendications 1 à 8, **caractérisé en ce que** le moyen d'engagement (6, 26) peut être positionné en direction axiale devant ou derrière le composant (15) et s'appuie par complémentarité de forme sur une face latérale externe du composant (9), en particulier une face latérale externe s'étendant radialement.

12. Dispositif selon l'une quelconque des revendications précédentes, **caractérisé en ce que** l'on prévoit un élément de contact (27) sur l'élément de fixation ou sur l'arbre (1).

13. Dispositif selon la revendication 12, **caractérisé en ce que** le composant (15) est agencé axialement entre l'élément de contact (27) et le moyen d'engagement (26) et **en ce que** la distance axiale entre le moyen d'engagement (26) et l'élément de contact (27) est choisie de telle sorte que lors d'une complémentarité de forme du composant (15) et du moyen d'engagement (26), le composant (15) est relié par liaison de force à l'élément de contact (27).

14. Dispositif selon l'une quelconque des revendications précédentes, **caractérisé en ce que** le rouleau (15) est conçu en tant que rouleau d'acheminement de fil (9) qui présente deux rainures de guidage (11,12) agencées parallèlement et symétriquement par rapport au milieu axial du rouleau (9) pour des profils de fil différents.
